(19) Europäisches Patentamt
European Patent Office
Office européen des brevets

(11) **EP 1 973 686 B1**

(12) **FASCICULE DE BREVET EUROPEEN**

(45) Date de publication et mention
de la délivrance du brevet:
**16.11.2011 Bulletin 2011/46**

(51) Int Cl.:
***B23K 11/11*** *(2006.01)*   ***B23K 11/18*** *(2006.01)*
***B23K 11/24*** *(2006.01)*

(21) Numéro de dépôt: **07712633.2**

(22) Date de dépôt: **04.01.2007**

(86) Numéro de dépôt international:
**PCT/FR2007/000006**

(87) Numéro de publication internationale:
**WO 2007/077393 (12.07.2007 Gazette 2007/28)**

(54) **PROCEDE DE SOUDAGE PAR RESISTANCE PAR POINTS D'ALLIAGES D'ALUMINIUM**

VERFAHREN ZUR PUNKTWIDERSTANDSSCHWEISSUNG VON ALUMINIUMLEGIERUNGEN

METHOD FOR SPOT RESISTANCE WELDING ALUMINIUM ALLOYS

(84) Etats contractants désignés:
**AT BE BG CH CY CZ DE DK EE ES FI FR GB GR HU IE IS IT LI LT LU LV MC NL PL PT RO SE SI SK TR**

(30) Priorité:   **06.01.2006  FR 0600101**

(43) Date de publication de la demande:
**01.10.2008  Bulletin 2008/40**

(73) Titulaire: **Engineered Products Switzerland AG 8048 Zürich (CH)**

(72) Inventeurs:
• **BORDESOULES, Isabelle**
  **F-38120 Saint Egreve (FR)**
• **HANTRAIS, Christian**
  **F-38850 Chirens (FR)**

(74) Mandataire: **Fénot, Dominique et al Alcan Centre de Recherches de Voreppe 725, rue Aristide Berges- BP 27 38341 Voreppe (FR)**

(56) Documents cités:
**FR-A- 2 361 967     GB-A- 2 280 135
JP-A- 4 356 373     JP-A- 6 320 291
JP-A- 8 010 963     JP-A- 2003 145 277
US-A- 3 010 049     US-A- 3 313 910**

EP 1 973 686 B1

**Description**

La présente invention se rapporte à un procédé de soudage par résistance par points de pièces en aluminium conformément au préambule de la revendication 1 (voir, par example, JP6/320291), le terme "aluminium" désignant ici les alliages contenant plus de 50% en poids d'aluminium. Plus particulièrement, cette invention s'intéresse au soudage de deux composants en aluminium, du genre "tôle" ou "profilé", qui possèdent une épaisseur au plus égale à quelques millimètres. Encore plus particulièrement, l'invention s'applique à des opérations de soudage effectuées dans le domaine de la construction automobile, par exemple pour l'assemblage robotisé d'éléments de carrosserie ou de structure de véhicules, ou d'éléments de châssis, tels que des longerons, berceaux, traverses...

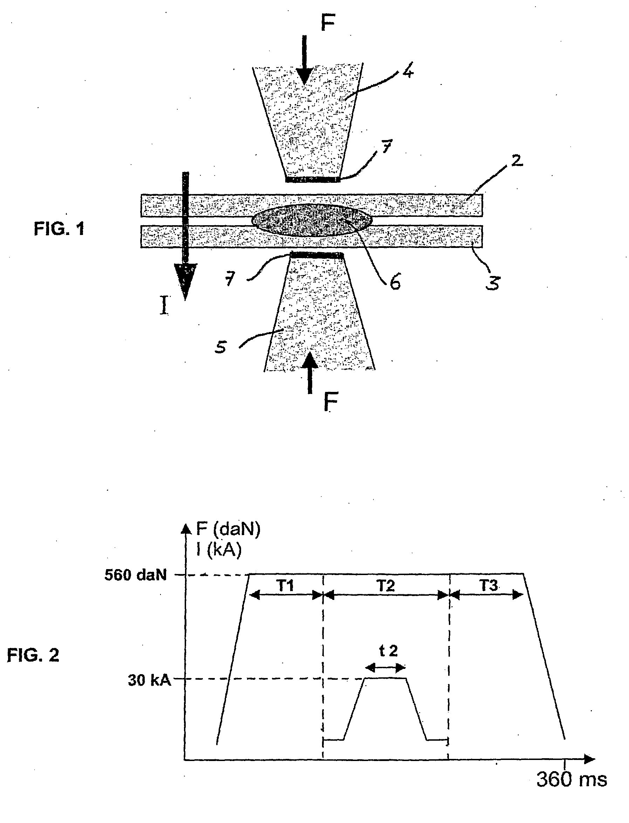

Le soudage par résistance par points de composants en aluminium est actuellement peu utilisé, notamment dans le domaine de la construction automobile, en raison de ses inconvénients détaillés ci-après. Il est néanmoins connu et son principe, analogue au soudage par points de pièces en acier, est ici rappelé en se référant à la figure 1 du dessin schématique annexé, en prenant pour exemple le soudage de deux tôles en alliage(s) d'aluminium 2 et 3.

Les deux tôles en aluminium 2 et 3, superposées dans la zone de soudure, sont engagées et pressées dans une "pince de soudage" qui comprend deux électrodes, à savoir une anode 4 et une cathode 5, situées en vis-à-vis. La pince de soudage permet de faire circuler pendant une courte durée un courant électrique continu de forte intensité I entre l'anode 4 et la cathode 5, ce courant traversant les deux tôles en aluminium 2 et 3, tout en exerçant par cette pince un effort de serrage F dans le sens du rapprochement des deux électrodes 4 et 5. Un point de soudure 6, de forme lenticulaire, est alors formé entre les deux tôles 2 et 3.

Plus particulièrement, la réalisation d'un tel point de soudure 6 est effectuée actuellement selon un cycle de courant I et d'effort F illustré par le diagramme de la figure 2. Le cycle peut être décomposé en trois phases successives, dites respectivement d'accostage, de soudage et de forgeage, dont les durées sont désignées respectivement par T1, T2 et T3.

Dans ce cycle, de façon classique, l'effort F est de valeur unique, constante durant les phases d'accostage, de soudage et de forgeage. Durant la phase d'accostage, qui correspond à la mise en place des deux tôles 2 et 3 à souder entre les deux électrodes 4 et 5 et au serrage de ces dernières, l'effort F est établi et stabilisé, mais aucun courant ne circule entre les électrodes 4 et 5. Le courant ne circule que pendant la phase de soudage, durant un temps t2, avec une valeur d'intensité I unique, l'établissement et le maintien du courant entre les deux électrodes 4 et 5 provoquant alors, par effet Joule, une élévation de température localisée au niveau de l'interface des deux tôles 2 et 3, avec fusion locale de l'aluminium. Le bain fondu obtenu, en forme de lentille, va se solidifier quand cessera le passage du courant, pour former le point de soudure 6.

Plus particulièrement, c'est au cours de la phase de forgeage, après interruption totale du passage du courant, que s'effectue le refroidissement dû bain fondu, sous la pression maintenue des électrodes 4 et 5, avec l'effort de serrage F qui reste égal à celui exercé dans les phases d'accostage et de soudage.

La qualité, donc la tenue mécanique du point de soudage 6 ainsi obtenu, est en particulier définie par son diamètre, qui doit lui-même respecter une relation avec l'épaisseur des tôles 2 et 3 à souder. Par exemple, le diamètre (en millimètres) du point de soudure doit respecter la valeur minimale de $4{,}5 \cdot \sqrt{e}$ , $e$ étant l'épaisseur de la tôle soudée (également en millimètres), ce critère d'acceptation étant dérivé de la norme NF EN ISO 8166.

Le principe du soudage par résistance par points de l'aluminium dans un contexte industriel est connu, comme le montre par exemple le brevet EP 0226317 au nom d'Alcan International Limited ou son équivalent, le brevet US 4972047.

Le soudage par résistance par points de l'aluminium, avec passage de courant continu, mis en oeuvre comme rappelé ci-dessus, nécessite en comparaison avec le soudage par points de l'acier des courants d'intensité plus élevée, induisant une surchauffe plus importante des électrodes et en particulier de l'anode, et par conséquent une sensibilité à la dégradation plus importante que dans le cas de l'acier. Par ailleurs, le diamètre des points de soudure évolue au cours de la vie des électrodes, ce qui est le signe de la détérioration précoce de celles-ci. De plus, la qualité des points de soudure devient médiocre, au fur et à mesure qu'augmente le nombre de points réalisés avec les mêmes électrodes ; on constate en particulier la présence de fissures et de porosités au coeur du point de soudure. Enfin, cette qualité des points de soudure conditionne elle-même la dégradation des électrodes.

Par exemple, la tenue mécanique des électrodes utilisées pour le soudage par résistance par points de l'aluminium, en courant continu, sur une pince de soudage à effort et intensité constants selon le cycle précédemment décrit, est comprise actuellement entre 100 et 200 points, si l'on fixe comme critère l'obtention de points de soudure dont le diamètre respecte la valeur minimale de $4{,}5 \cdot \sqrt{e}$ (selon la formule indiquée plus haut). A titre comparatif, dans le cas du soudage de l'acier par un procédé et des moyens analogues, les électrodes ont une durée de vie de l'ordre de 400 points, en appliquant le même critère. La durée de vie des électrodes utilisées pour le soudage de l'aluminium est donc à considérer comme faible, ce qui pénalise la mise en oeuvre industrielle du soudage par résistance par points de l'aluminium, puisque les électrodes doivent être fréquemment remplacées.

Pour prolonger la durée de vie des électrodes, une solution connue consiste à disposer une brosse sur la pince de soudage, afin de nettoyer l'électrode tous les vingt à cent points, selon les alliages d'aluminium utilisés Cette solution est décrite dans la publication « A new approach for robust high productivity résistance spot welding of Aluminium » par Douglas R. Boomer et al. de janvier 2003 ; elle est toutefois difficilement industrialisable sur les chaînes de montage des constructeurs automobiles.

Une autre solution connue, pour prolonger la durée de vie des électrodes, consiste à déposer sur chaque électrode 4 ou 5, du côté de sa face active entrant en contact avec la pièce en aluminium à souder, une couche de nickel 7 qui empêche la dégradation de l'électrode, elle-même réalisée en alliage de cuivre, par le contact de la pièce en aluminium. A titre d'exemples, il est ici fait référence au brevet français FR 2361967 et au brevet US 4079223, le document EP 0830915 pouvant aussi être signalé à ce sujet. Les points de soudure obtenus avec de telles électrodes nickelées sont de forme circulaire plus régulière, et de diamètre plus reproductible. Avec une utilisation à effort et intensité constants, selon le cycle précédemment décrit, on peut ainsi obtenir une durée de vie des électrodes atteignant environ 400 points de soudure, donc doublée par rapport à celle obtenue avec des électrodes classiques.

Néanmoins, le besoin se fait encore actuellement sentir d'améliorer la qualité et la fiabilité des points de soudure et d'augmenter encore plus la durée de vie des électrodes, pour que le soudage par résistance par points de l'aluminium puisse véritablement s'imposer dans l'industrie et notamment dans le domaine de la construction automobile, en remplacement d'autres procédés d'assemblage tels que le rivetage, le clinchage ou le soudage laser notamment.

La présente invention a donc pour but d'améliorer encore le procédé de soudage par résistance par points de l'aluminium, ceci par une optimisation des paramètres de soudage, en vue d'améliorer aussi bien la qualité des points de soudure que la longévité des électrodes, et de permettre une véritable application industrielle de ce type de soudage.

A cet effet, l'invention a pour objet un procédé de soudage par résistance par points d'alliages d'aluminium tel que défini dans la revendication 1.

Les paramètres du cycle de soudage, en particulier les valeurs d'effort et d'intensité du courant, et leurs temps d'application, sont ainsi optimisés et synchronisés, notamment en faisant coïncider le début de la phase de forgeage avec le début d'un temps de post-chauffage par maintien du courant, à une valeur plus faible que celle du soudage proprement dit. Le pré-chauffage agit favorablement sur le diamètre du point de soudure, en augmentant ce diamètre. Le post-chauffage tend à améliorer la qualité du point de soudure, en diminuant la présence des défauts tels que les fissures et les porosités, car il permet en quelque sorte un forgeage à chaud.

Dans l'ensemble, on obtient ainsi une augmentation supplémentaire de la durée de vie des électrodes, en particulier de l'anode, tout en améliorant la qualité des points de soudure. Des résultats particulièrement remarquables ont été obtenus en combinant le cycle de soudage optimisé, tel que défini ci-dessus, avec l'utilisation d'électrodes dont au moins l'une, en particulier l'anode, est recouverte d'une couche de nickel. La durée de vie des électrodes peut ainsi passer d'environ 400 points de soudure (voir plus haut) à environ 800 points de soudure.

En conséquence, la fréquence de remplacement des électrodes est réduite, et la productivité peut être sensiblement augmentée, dans un contexte industriel.

De plus, l'amélioration de la régularité des points de soudure, et la fiabilité augmentée du diamètre de ces points de soudure (par rapport au critère du diamètre requis), permet dans un contexte industriel de supprimer ou de limiter des contrôles, ce qui induit aussi une diminution des coûts.

La qualité interne des points de soudure est aussi augmentée, par réduction des porosités et des fissures, ceci sans diminution de l'épaisseur soudée.

Enfin, le procédé de l'invention reste compatible avec toute technique, telle que le ragréage des électrodes par utilisation d'une solution chimique de décapage, susceptible d'augmenter encore la durée de vie des électrodes. Grâce à l'invention, l'opération de ragréage peut n'être effectuée qu'après réalisation d'un nombre de points de soudure plus grand, donc le plus tard possible.

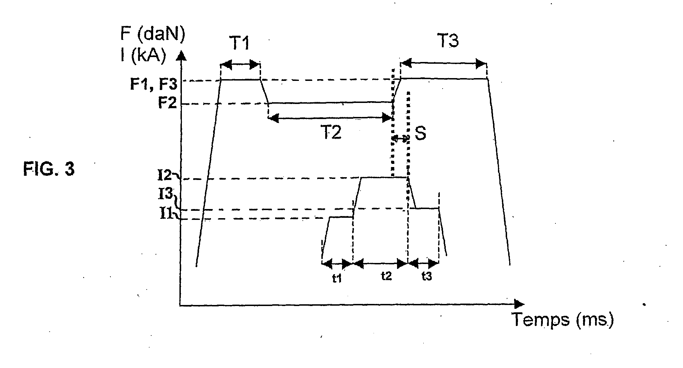

A titre d'exemple, le diagramme de la figure 3 (à comparer à celui de la figure 2) illustre le cycle de courant I et d'effort F résultant des dispositions de l'invention.

Durant la phase d'accostage, dont la durée T1 est comprise entre 50 et 200 ms, l'effort possède une valeur F1 comprise entre 300 daN et 650 daN. L'intensité I du courant est encore nulle durant toute cette phase d'accostage.

Durant la phase suivante de soudage, dont la durée T2 est comprise entre 50 et 200 ms, l'effort possède une valeur F2 comprise entre 200 daN et 650 daN, la valeur d'effort F2 étant de préférence inférieure à la valeur d'effort F1 appliquée au cours de la phase d'accostage.

Pendant un temps de préchauffage t1, qui se superpose à une fraction de la phase de soudage, circule un courant de pré-chauffage qui possède une intensité I1 comprise entre 5 kA et 50 kA, le temps de pré-chauffage t1 étant compris entre 50 et 200 ms. Ensuite, passe le courant de soudage proprement dit, dont l'intensité I2 est comprise entre 10 ka et 50 kA, et est en principe supérieure à l'intensité I1 du courant de pré-chauffage, le temps t2 de passage du courant de soudage étant compris entre 50 et 200 ms, et se situant à l'intérieur de la durée T2.

Enfin, durant la phase de forgeage, dont la durée T3 est comprise entre 50 et 200 ms, l'effort possède une valeur F3 comprise entre 350 daN et 650 daN, la valeur d'effort F3 étant supérieure à la valeur d'effort F2 appliquée durant la phase de soudage. Le début de la durée T3 de cette phase de forgeage coïncide sensiblement avec le début du temps t3 de passage du courant de post-chauffage, dont l'intensité I3 est comprise entre 5 kA et 50 kA, mais reste inférieure à l'intensité 12 du courant de soudage, cette synchronisation étant symbolisée en "S". Le temps t3 de passage du courant de post-chauffage, faisant directement suite au temps t2, est compris entre 50 et 200 ms.

Comme il résulte de ce qui précède, la durée totale d'un cycle complet de soudage est comprise entre 150 et 600 ms, donc brève.

La mise en oeuvre du procédé de soudage par résistance par points, selon le cycle précédemment détaillé, est réalisable au moyen d'une pince de soudage robotisée, actionnée par un moteur électrique avec transmission par vis sans fin, assurant un contrôle précis de l'effort mécanique de serrage, lequel est transmis par les électrodes.

Le courant électrique circulant par ces électrodes est un courant "continu" obtenu par redressement et hachage, par exemple à une fréquence de 1000 Hz, d'un courant alternatif, un régulateur électronique maintenant l'intensité de ce courant aux valeurs paliers I1, I2 et I3 précédemment définies. Les électrodes sont de préférence nickelées avec un dépôt électrochimique en bain de sulfamates, qui est particulièrement pur et possède une bonne conductivité électrique.

Ce procédé de soudage par résistance par points est notamment applicable à l'assemblage entre elles de tôles d'aluminium, c'est-à-dire des produits laminés minces, dont l'épaisseur est notamment comprise entre 0,7 mm et 3 mm. Le même procédé est aussi applicable à l'assemblage entre eux de profilés en aluminium, c'est-à-dire des produits extrudés.

Bien entendu, l'assemblage d'un profilé en aluminium sur une tôle d'aluminium est aussi envisageable.

Les matériaux soudables par le procédé de l'invention sont choisis notamment parmi les alliages d'aluminium des séries 2XXX, 5XXX, 6XXX et/ou 7XXX selon la nomenclature de « L'Aluminum Association ».

L'invention sera encore illustrée ci-après par des exemples, résumés par un tableau.

Exemples :

Un premier exemple, relatif au soudage de deux tôles en alliage d'aluminium du type 6016, d'une épaisseur de 1,2 mm, correspond à la partie supérieure du tableau. Un second exemple, relatif au soudage de deux tôles en alliage d'aluminium du type 5182, également d'une épaisseur de 1,2 mm, correspond à la partie inférieure du tableau.

Dans les deux cas, le tableau permet de comparer :

- le soudage réalisé selon un cycle à effort constant et courant constant, selon l'état de la technique (cycle illustré par la figure 2) ;
- le soudage réalisé selon le procédé de l'invention, c'est-à-dire selon le cycle illustré par la figure 3, en utilisant des électrodes non nickelées ;
- le soudage réalisé selon le procédé de l'invention, mais en utilisant des électrodes nickelées.

Pour le soudage selon le procédé de l'invention, la synchronisation était réglée à « zéro », c'est-à-dire que l'instant de fin du temps de passage du courant de soudage coïncidait avec le début de la phase de forgeage et le début du temps de passage du courant de post-chauffage. Les critères d'arrêt appliqués ayant été les mêmes dans tous les cas (rupture inter-faciale, point de soudure de diamètre inférieur à $4,5 \cdot \sqrt{e}$), les essais effectués ont permis d'atteindre les résultats suivants :

- pour l'alliage du type 6016 avec le procédé de l'état de la technique : environ 200 points de soudure ;
- pour l'alliage du type 6016 avec le procédé de l'invention (sans électrodes nickelés) : environ 400 points de soudure ;
- pour l'alliage du type 5182 avec le procédé de l'état de la technique : environ 300 points de soudure ;
- pour l'alliage du type 5182 avec le procédé de l'invention (sans électrodes nickelées) : environ 800 points de soudure.

Enfin, dans le cas du procédé de l'invention mis en oeuvre avec des électrodes nickelées, le critère d'arrêt appliqué étant une forte projection au contact électrode / tôle et un collage sur l'électrode, les résultats obtenus ont été les suivants :

- pour l'alliage de type 6016 : environ 800 points ;
- pour l'alliage du type 5182 : environ 3000 points.

| | temps (ms) | | | | | effort (daN) | | | courant (KA) | | |
|---|---|---|---|---|---|---|---|---|---|---|---|
| 6016 effort constant | accostage | préchauffage | soudage | post-ch. | forgeage | accostage | soudage | forgeage | préchauffage | soudage | post-ch. |
| | 100 | néant | 60 | néant | 100 | 400 | 400 | 400 | néant | 31 | néant |
| 6016 cycle d'effort et de courant | accostage | préchauffage | soudage | post-ch. | forgeage | accostage | soudage | forgeage | préchauffage | soudage | post-ch. |
| | 100 | 20 | 60 | 60 | 100 | 560 | 400 | 560 | 10 | 29 | 8 |
| 6016 cycle d'effort et de courant+Ni | accostage | préchauffage | soudage | post-ch. | forgeage | accostage | soudage | forgeage | préchauffage | soudage | post-ch. |
| | 100 | 20 | 40 | 20 | 100 | 590 | 480 | 590 | 10 | 25 | 8 |

| | temps (ms) | | | | | effort (daN) | | | courant (KA) | | |
|---|---|---|---|---|---|---|---|---|---|---|---|
| 5182 effort constant | accostage | préchauffage | soudage | post-ch. | forgeage | accostage | soudage | forgeage | préchauffage | soudage | post-ch. |
| | 100 | néant | 60 | néant | 100 | 400 | 400 | 400 | néant | 29 | néant |
| 5182 cycle d'effort et de courant | accostage | préchauffage | soudage | post-ch. | forgeage | accostage | soudage | forgeage | préchauffage | soudage | post-ch. |
| | 100 | 20 | 60 | 40 | 100 | 560 | 450 | 560 | 10 | 24 | 8 |
| 5182 cycle d'effort et de courant+Ni | accostage | préchauffage | soudage | post-ch. | forgeage | accostage | soudage | forgeage | préchauffage | soudage | post-ch. |
| | 100 | 20 | 40 | 20 | 100 | 590 | 480 | 590 | 10 | 22 | 8 |

**EP 1 973 686 B1**

**Revendications**

1.  Procédé de soudage par résistance par points d'alliages d'aluminium, avec utilisation de deux électrodes de soudage (4, 5) situées en vis-à-vis, à savoir une anode (4) et une cathode (5), placées de part et d'autre d'éléments en alliage d'aluminium (2, 3) à assembler par soudage et prévues pour faire passer entre elles, donc entre lesdits éléments (2, 3), un courant électrique continu (I) tout en exerçant un effort de serrage (F), selon un cycle décomposé en une phase d'accostage, une phase de soudage et une phase de forgeage, **caractérisé en ce que**:

    - le passage du courant électrique (I) entre les électrodes (4, 5) est maintenu, au moins au début de la phase de forgeage, de manière à réaliser un post-chauffage,
    - la phase d'accostage est effectuée pendant une durée (T1), comprise entre 50 et 200 ms, avec une première valeur d'effort (F1), comprise entre 300 et 650 daN, et sans passage de courant (I) entre les électrodes (4, 5),
    - la phase de soudage est effectuée pendant une durée (T2), comprise entre 50 et 200 ms, avec une deuxième valeur d'effort (F2), comprise entre 200 et 650 daN, inférieure à la première (F1), et au moins partiellement avec passage entre les électrodes (4, 5) durant un temps (t1), compris entre 50 et 200 ms, d'un courant de pré-chauffage d'une première valeur d'intensité (I1), comprise entre 10 et 50 kA, suivi du passage, durant un temps (t2), compris entre 50 et 200 ms, d'un courant de soudage proprement dit, d'une deuxième valeur d'intensité (I2), comprise entre 10 et 50 kA, plus élevée que celle (I1) du courant de pré-chauffage,
    - la phase de forgeage est effectuée pendant une durée (T3), comprise entre 50 et 200 ms, avec une troisième valeur d'effort (F3), comprise entre 350 et 650 daN, supérieure à la deuxième (F2) et avec, au moins au début de cette phase de forgeage, passage durant un temps (t3), compris entre 50 et 200 ms, d'un courant de post-chauffage, d'une troisième valeur d'intensité (I3), comprise entre 5 et 50 kA, inférieure à celle (I2) du courant de soudage.
    - le début de la durée (T3) de la phase de forgeage coïncidant sensiblement avec le début du temps (t3) de passage de courant de post-chauffage.

2.  Procédé selon la revendication 1, **caractérisé en ce que** le soudage est effectué avec utilisation d'électrodes (4, 5) dont au moins l'une, en particulier l'anode (4) est recouverte d'une couche de nickel (7).

3.  Procédé selon l'une quelconque des revendications 1 ou 2, **caractérisé en ce que** les matériaux soudés sont choisis parmi les alliages d'aluminium des séries 2XXX, 5XXX, 6XXX et/ou 7XXX selon la nomenclature de « L'Aluminum Association ».

**Claims**

1.  Resistance spot welding process for aluminum alloys, using two welding electrodes (4, 5) located opposite each other, namely an anode (4) and a cathode (5), placed on either side of aluminum alloy components (2, 3) to be assembled by welding and designed so that a direct electric current (I) flows between them, and therefore between said components (2, 3), while exercising a clamping force (F), according to a cycle broken down into a fitup phase, a welding phase and a forging phase, **characterized in that**:

    - the flow of electric current (I) between the electrodes (4, 5) is maintained at least at the start of the forging phase, so as to perform post-heating,
    - the fitup phase is performed for a period (T1), ranging between 50 and 200 ms, with an initial force value (F1), ranging between 300 and 650 daN, and current (I) flowing between the electrodes (4,5),
    - the welding phase is performed for a period (T2), ranging between 50 and 200 ms, with a second force value (F2), ranging between 200 and 650 daN, lower than the first (F1), and at least partially with a pre-heating current flowing between the electrodes (4, 5) for a time (t1), ranging between 50 and 200 ms, with a first intensity value (I1), ranging between 10 and 50 kA followed by the welding current proper flowing for a time (t2), ranging between 50 and 200 ms, with a second intensity value (I2), ranging between 10 and 50 kA, higher than that (I1) of the pre-heating current,
    - the forging phase is performed for a period (T3), ranging between 50 and 200 ms, with a third force value (F3), ranging between 350 and 650 daN, higher than the second (F2) and at least at the beginning of this forging phase, a post-heating current flowing for a time (t3), ranging between 50 and 200 ms, with a third intensity value (I3), ranging between 5 and 50 kA lower than that (I2) of the welding current,
    - the beginning of the period (T3) of the forging phase substantially coinciding with the beginning of time (t3) of post-heating current flow.

6

**2.** Process according to claim 1, wherein the welding is performed using electrodes (4, 5) at least one of which, in particular the anode (4), is covered with a layer of nickel (7).

**3.** Process according to claim 1 or 2, wherein the welded materials are selected from series 2XXX, 5XXX, 6XXX and / or 7XXX aluminum alloys according to the nomenclature of "The Aluminum Association."

**Patentansprüche**

**1.** Verfahren zum Widerstandspunktschweißen von Aluminiumlegierungen bei Verwendung zweier einander gegenüberliegender Schweißelektroden (4, 5), nämlich einer Anode (4) und einer Kathode (5), die zu beiden Seiten der durch Schweißen zusammenzufügenden Elemente (2, 3) aus einer Aluminiumlegierung platziert werden und dafür vorgesehen sind, dass zwischen ihnen und folglich zwischen den Elementen (2, 3) ein Gleichstrom (I) fließt, während sie zugleich eine Klemmkraft (F) ausüben, gemäß einem Zyklus, der sich in eine Phase des Ankoppelns, eine Phase des Schweißens und eine Phase des Warmmassivumformens einteilen lässt, **dadurch gekennzeichnet, dass**:

- der Fluss des elektrischen Stroms (I) zwischen den Elektroden (4, 5) zumindest zu Beginn der Phase des Warmmassivumformens aufrechterhalten wird, sodass ein Nachheizen erfolgt,
- die Phase des Ankoppelns während einer Dauer (T1), im Bereich zwischen 50 und 200 ms, bei einem ersten Betrag der Kraft (F1), im Bereich zwischen 3000 und 6500 N, erfolgt, während zwischen den Elektroden (4, 5) kein Strom (I) fließt,
- die Phase des Schweißens während einer Dauer (T2), im Bereich zwischen 50 und 200 ms, bei einem zweiten Betrag der Kraft (F2), im Bereich zwischen 2000 und 6500 N, der kleiner als der erste (F1) ist, erfolgt, wobei zwischen den Elektroden (4, 5) zumindest teilweise, während einer Zeit (t1), im Bereich zwischen 50 und 200 ms, ein Vorheizstrom mit einem ersten Intensitätswert (I1), im Bereich zwischen 10 und 50 kA, fließt, woraufhin während einer Zeit (t2), im Bereich zwischen 50 und 200 ms, der eigentliche Schweißstrom mit einem zweiten Intensitätswert (I2), im Bereich zwischen 10 und 50 kA, der höher als jener (I1) des Vorheizstroms ist, fließt,
- die Phase des Warmumformens während einer Dauer (T3), im Bereich zwischen 50 und 200 ms, bei einem dritten Betrag der Kraft (F3), im Bereich zwischen 3500 und 6500 N, der größer als der zweite (F2) ist, erfolgt, wobei zumindest zu Beginn dieser Phase des Warmumformens, während einer Zeit (t3), im Bereich zwischen 50 und 200 ms, ein Nachheizstrom mit einem dritten Intensitätswert (13), im Bereich zwischen 5 und 50 kA, der kleiner als jener (I2) des Schweißstroms ist, fließt,
- der Beginn der Dauer (T3) der Phase des Warmumformens im Wesentlichen mit dem Beginn der Zeit (t3) des Flusses des Nachheizstroms zusammenfällt.

**2.** Verfahren nach Anspruch 1, **dadurch gekennzeichnet, dass** das Schweißen bei Verwendung von Elektroden (4, 5) erfolgt, von denen mindestens eine, insbesondere die Anode (4), mit einer Nickelschicht (7) bedeckt ist.

**3.** Verfahren nach Anspruch 1 oder 2, **dadurch gekennzeichnet, dass** die geschweißten Werkstoffe unter den Aluminiumlegierungen der 2XXXer, 5XXXer, 6XXXer und/oder 7XXXer Reihen, entsprechend der Nomenklatur der AA *(Aluminum Association)* bezeichnet, ausgewählt sind.

FIG. 1

FIG. 2

8

FIG. 3

**EP 1 973 686 B1**

**RÉFÉRENCES CITÉES DANS LA DESCRIPTION**

**Documents brevets cités dans la description**

- JP 6320291 A
- EP 0226317 A
- US 4972047 A
- FR 2361967
- US 4079223 A
- EP 0830915 A

**Littérature non-brevet citée dans la description**

- **DOUGLAS R. BOOMER et al.** *A new approach for robust high productivity résistance spot welding of Aluminium,* Janvier 2003